# EUROPÄISCHE PATENTSCHRIFT

(11) **EP 0 706 323 B1**
(45) Veröffentlichungstag und Bekanntmachung des Hinweises auf die Patenterteilung: **05.02.1997**
(21) Anmeldenummer: 94918678.7
(22) Anmeldetag: 16.06.1994
(51) Int. Cl.: A21B 5/02, A21C 15/02

(54) **MEHRTEILIGE BACKFORM UND VERFAHREN ZUR HERSTELLUNG EINES BACKERZEUGNISSES**
COMPOSITE PASTRY MOULD AND BAKED GOODS PRODUCTION PROCESS
MOULE A PATISSERIE EN PLUSIEURS PARTIES ET PROCEDE DE PRODUCTION DE PATISSERIES

(30) Priorität: 17.06.1993 AT 1192/93
(43) Veröffentlichungstag der Anmeldung: 17.04.1996
(73) Patentinhaber: HAAS, Nada, A-1010 Wien (AT)
(72) Erfinder: HAAS, Nada, A-1010 Wien (AT)
(74) Vertreter: Müllner, Erwin, Dr.
(86) Internationale Anmeldenummer: AT9400077
(87) Internationale Veröffentlichungsnummer: WO9500023

(56) Entgegenhaltungen:
- WO-A-92/10938
- FR-A- 2 646 323
- US-A- 1 576 202
- US-A- 3 947 212

## Beschreibung

Die Erfindung betrifft eine mehrteilige Backform zur Herstellung eines Backerzeugnisses aus Waffelteig od.dgl., wie einer eßbaren Eistüte oder eines Eisbechers, mit mindestens einem den Waffelteig aufnehmenden Form-Unterteil mit der Außenkontur des Backerzeugnisses, in den ein im wesentlichen kegelförmiger Formkern eines oberen Formteiles mit der Innenkontur des Backerzeugnisses einschiebbar ist, und mit Dampfauslässen zum Abführen des beim Backvorgang entstehenden Dampfes, wobei der im wesentlichen kegelförmige Formkern mit einem zylindrischen Teil an einer Formplatte gehalten ist, ein ringförmiger Formteil den zylindrischen Teil umgibt und eine an der Formplatte fußende Druckkraft axial der Schließbewegung der Backform entgegengerichtet ist, sowie ein Verfahren zur Herstellung eines Backerzeugnisses aus Waffelteig.

Zur industriellen Herstellung von Eistüten oder Eisbechern aus Waffelteig oder einer ähnlichen Backmischung sind Backformen bekannt, bei welchen eine Vielzahl von kegelförmigen Formkernen, die von einer Formplatte eines oberen Formteiles vorspringen, in kegelförmige Ausnehmungen eines unteren Formteiles eintauchen. Nach Befüllen der kegelförmigen Ausnehmungen mit flüssigem Waffelteig erfolgt ein mehrfaches Schließen und wieder Öffnen der geheizten Form, wobei Dampf und Teigreste entweichen und die Form in dieser Phase des Backvorganges nicht zur Gänze gefüllt ist, sodaß sich am Endprodukt im äußeren Erscheinungsbild Farbunterschiede erkennen lassen. Schließlich wird die Form endgültig geschlossen und das Produkt, also z.B. eine Eistüte, ausgebacken. Um ein festes Endprodukt zu erzielen, wird meist der Zuckergehalt des Teiges erhöht. Dadurch neigt das Produkt jedoch zum Verkleben mit der Form. Es kann zu Problemen beim Ausformen kommen. Die Reinigung der Backform ist aufwendig, da vor dem endgültigen Verschließen der Form relativ viel Teig aus der Form austritt bzw. beim wiederholten Öffnen und Schließen derselben herausgespritzt.

Aus der US-PS 3 947 212 ist eine maschinelle Einrichtung mit mehrteiligen Backformen zur Herstellung von Eisbechern oder Eistüten bekannt. Auf einer Formplatte sind kegelförmige Formkerne angeordnet, die in Formunterteile mit kegelförmigen Ausnehmungen eintauchen. Ein in die kegelförmigen Ausnehmungen eingebrachter Backteig wird durch die Formkerne so verdrängt, daß sich nach Hitzeeinwirkung das gewünscht dünnwandige Erzeugnis ergibt. Um eine Eistüte oder einen Eisbecher mit ringsum gleicher Wandstärke zu erhalten, ist es erforderlich, daß die Formkerne genau zentrisch in die Formunterteile eintauchen. Um dies zuverlässig zu erreichen, sind die Formkerne auf der Formplatte mit Spiel federnd gelagert, sodaß sie sich zentrisch ausrichten können, wenn sie sich beim Schließen der Formen am oberen Rand des Formunterteiles abstützen. Dazu setzt am kegelförmigen Formkern oben ein zylindrischer Teil an, der in einer Ausnehmung der Formplatte mit Spiel geführt ist. Ferner ist ein ringförmiger Formteil als Hülse auf den zylindrischen Teil aufgezogen. Diese Hülse überragt den kegelförmigen Formkern in radialer Richtung und bildet mit ihrer Stirnfläche die mit dem Formkern starr verbundene Abschlußfläche der Form nach oben. Eine Veränderung der Wandstärke ist bei geschlossener Form bei dieser bekannten Ausführung nicht möglich.

Die Erfindung zielt darauf ab, eine mehrteilige Backform der eingangs beschriebenen Art zu schaffen, die leicht befüllbar ist, praktisch keinen Abfall durch aus der Form austretenden Teig produziert und eine sofortige Verteilung des Teiges über den gesamten Hohlkörper der Form ermöglicht, wobei auch dichte, feste Backergebnisse bei einheitlicher Färbung ohne der Nachteile eines erhöhten Zuckergehaltes erreichbar sein sollen. Dies wird mit der genannten Backform dadurch erreicht, daß der ringförmige Formteil auf dem als Führungszylinder für diesen ausgebildeten zylindrischen Teil relativ zum Formkern verschiebbar gelagert und gegen den Form-Unterteil durch eine Druckkraft, insbesondere durch Druckfedern, die sich einerseits an der Formplatte des oberen Formteiles, welche den Formkern trägt und anderseits an Schultern des verschiebbaren ringförmigen Formteiles abstützen, vorgespannt ist, sodaß der ringförmige Formteil beim Schließen der Form der Endlage des Formkernes im Form-Unterteil vorauseilt. Der am Formkern unter Federkraft vorgeschobene ringförmige Formteil schließt die Form deckelartig ab, noch bevor der Formkern seine Endposition im Form-Unterteil erreicht hat. Damit ergeben sich ideale Voraussetzungen für eine homogene Masseverteilung, ein wirksamer Schutz vor einem unkontrollierten Entweichen von Teigmasse und ein Beibehalten kurzer Entlüftungskanäle bzw. Dampfauslässe in der Teilungsebene zwischen dem ringförmigen Formteil bzw. dessen Stirnseite und dem Form-Unterteil. Es ist zweckmäßig, wenn der relativ zum Formkern verschiebbare ringförmige Formteil stirnseitig, dem Form-Unterteil zugewandt, an seinem Umfang die Außenkontur des Randes des Backerzeugnisses, beispielsweise des Öffnungsrandes einer Eistüte trägt und den Form-Unterteil schon bei aneinander angenäherten oberem Formteil und Form-Unterteil sowie auch bei geschlossener Backform, insbesondere unter Beibehaltung mindestens eines Dampfauslasses, abschließt. Der ringförmige Formteil bildet den oberen Abschluß der Backform und trägt das Abbild der Berandung der Eistüte oder eines ähnlichen Backerzeugnisses an seiner Stirnseite. Dieser Bereich wird durch den beim Schließen der Form verdrängten Waffelteig besonders hart verdichtet, was sich für den ohnehin am stärksten beanspruchten Rand einer Eistüte sehr günstig auswirkt. Um einerseits ein sattes Aüsfüllen von Bereichen außerhalb der Teilungsebene mit Waffelteig und damit eine stabile Struktur zu ermöglichen und anderseits ein Austreten des Waffelteiges aus Dampfauslässen zu vermeiden, die diese Bereiche entlüften, bzw. bereits ausgetretenen Teig abzuschne, ist es zweckmäßig, wenn in mindestens einem Formteil außerhalb einer Teilungsfläche mindestens ein Dampfauslaß vorgesehen ist, der - insbesondere zeitverschoben gegenüber dem Schließen der Form - verschließbar ausgebildet ist. Kurz vor Erreichen der Endposition des Formkernes in den Form-Unterteil schließt der Dampfauslaß, damit der Waffelteig nicht in den Dampfauslaßkanal gedrückt wird und der obere Bereich der Form auch vollständig mit Teig gefüllt wird. Dies ist insbesondere dann von großer Bedeutung, wenn ein Dampfauslaß außerhalb der Teilungsfläche der Form liegt, da dort ein Reinigen problematisch ist und nicht ohne weiteres automatisiert werden kann. Es kann das Schließen der Dampfauslässe auf den Verlauf des Backvorganges abgestimmt werden. Neben den üblichen konischen Eistüten oder Eisbechern wurden neuerdings solche entwickelt, die einen kragenartigen, tellerähnlichen Tropfenfänger im Abstand unterhalb der Aufnahmeöffnung für das Eis aufweisen. Für solche spezielle Ausbildungen eines Backerzeugnisses eignet sich die erfindungsgemäße Backform ganz besonders. Sie ist in diesem Fall dadurch gekennzeichnet, daß der Form-Unterteil axial geteilt und mit einer Ausnehmung gemäß der Außenkontur eines unteren Eistütenbereiches einschließlich der Unterkontur eines tellerförmig zwischen dem Form-Unterteil und dem oberen Formteil ausladenden Tropfenfängers der Eistüte im Bereich der Teilungsfläche ausgebildet ist und daß der ringförmige Formteil eine stirnseitige Außenkontur entsprechend der Oberseite des tellerförmigen Tropfenfängers der Eistüte und eine Innenkontur der Ringfläche entsprechend der Außenkontur des oberen Tütenteiles aufweist. Dabei ist es zweckmäßig, werin im ringförmigen Formteil mindestens ein verschließbarer Dampfauslaß, insbesondere eine scharfkantig ausmündende kegelige Bohrung im Bereich der Aufnahmeöffnung der Eistüte vorgesehen ist und wenn im starr an der Formplatte angeordneten Formkern, in dem die Aufnahmeöffnung der Tüte ausformenden oder an diesen anschließenden Führungszylinder, eine Fläche ausgebildet ist, die an der Innenfläche des ringförmigen Formteiles anliegt und beim Verdichten der geschlossenen Form und vollständigem Einschieben des Formkernes gegen die Kraft der den ringförmigen Formteil abstützenden Federn über die innere Öffnung des Dampfauslasses schiebbar ist. Insbesondere ist der zwischen der Formplatte und dem kegeligen Formkern vorgesehene Führungszylinder mit seiner Mantelfläche über die inneren Ausmündungen der Dampfauslässe, diese verschließend, schiebbar. Somit kann in die Kanäle der Dampfauslässe kein Waffelteig eindringen, wobei die Form vollständig mit Teig gefüllt wird, weil der Teig die in der Form befindliche Luft durch diese Dampfauslässe hinausdrückt. Zur Vermeidung des Festfressens der aufeinander gleitenden Formteile ist es Zweckmäßig, wenn der ringförmige Formteil und der Formkern mit dem Führungszylinder aus unterschiedlichen Materialien, beispielsweise Messing und Stahl, bestehen.

Wenn der Backvorgang beendet ist, dann wird wie üblich der obere Formteil angehoben, also der Formkern ausgehoben und der Form-Unterteil zur Entnahme des Fertigproduktes geteilt. Dabei ist es zweckmäßig, wenn der ringförmige Formteil als Niederhalter zum zeitweiligen Festahlten der fertigen Eistüte im Form-Unterteil beim stufenweisen Entformen während des Herausziehens des Formkernes vorgesehen ist. Es wird dadurch verhindert, daß das Fertigprodukt am Formkern haften bleibt und mit diesem aus der Form ausgehoben wird.

Um ein exakt der Form entsprechendes, gleichmäßig in der Färbung und homogen im Inneren anfallendes Backerzeugnis mit festem Körper zu erhalten, wird ein Verfahren zur Herstellung unter Zuhilfenahme obiger mehrteiliger Backform vorgeschlagen, das durch gekennzeichnet ist, daß nach Befüllen des Form-Unterteiles mit Waffelteig der obere Formteil und der Form-Unterteil einander so weit angenähert werden, bis der ringförmige Formteil auf der Öffnung des Form-Unterteils unter Vorspannung aufliegt und die Öffnung abschließt, daß dann gegebenenfalls nach einem Vorbacken von beispielsweise 10 Sekunden der Formkern durch den ringförmigen Formteil hindurch in den Form-Unterteil bis etwa in eine Position im Spaltabstand entsprechend der endgültigen Wandstärke des fertigen Backerzeugnisses vorzugsweise auf die Dauer von 1 bis 4 Sekunden stoßartig vorgeschoben wird, daß der Formkern dann in eine Position entsprechend etwa der doppelten bis dreifachen Wandstärke des fertigen Backerzeugnisses zurückgezogen und in dieser Position der Backvorgang bei einer Eistüte etwa 100 Sekunden durchgeführt wird, daß dann der Formkern in die Position der endgültigen Wandstärke vorgeschoben, das Backerzeugnis verdichtet und das Ausbacken beispielsweise für 60 Sekunden durchgeführt wird und schließlich der obere Formteil vom Form-Unterteil getrennt wird, wobei der ringförmige Formteil das Backerzeugnis während des Öffnens der Form im Form-Unterteil festhält, bis der Abstand des oberen Formteils vom Form-Unterteil größer ist als der Verschiebungsweg des ringförmigen Formteils längs des Formkerns und sodann der Form-Unterteil längs einer Symmetrieebene geteilt und das Backerzeugnis entnommen bzw. ausgestoßen wird. Nach dem Verschließen der Backform durch den ringförmigen Formteil wird durch ein blitzartiges Eintauchen des Kernes bis zu seiner Endstellung im Form-Unterteil der Waffelteig bis in die letzte Ecke der Form Zuverlässig verteilt und durch einen nachfolgenden ersten Backvorgang bei zurückgezogenem Formkern und einer noch zu großen Wandstärke stabilisiert. Der Formkern wird unter Verdichtung des Backwerkes wieder in die Endlage geschoben und das endgültige Ausbacken erfolgt. Durch Wahl der Verdichtungsverhältnisse und durch Abstimmung der Backzeiten vor und nach dem Endverdichten kann die Festigkeit des Endproduktes sehr gut beeinflußt werden. Daher ist das Verfahren auch zur Herstellung von biologisch abbaubaren Behältern und sogenannten "eßbarer" Verpackung geeignet.

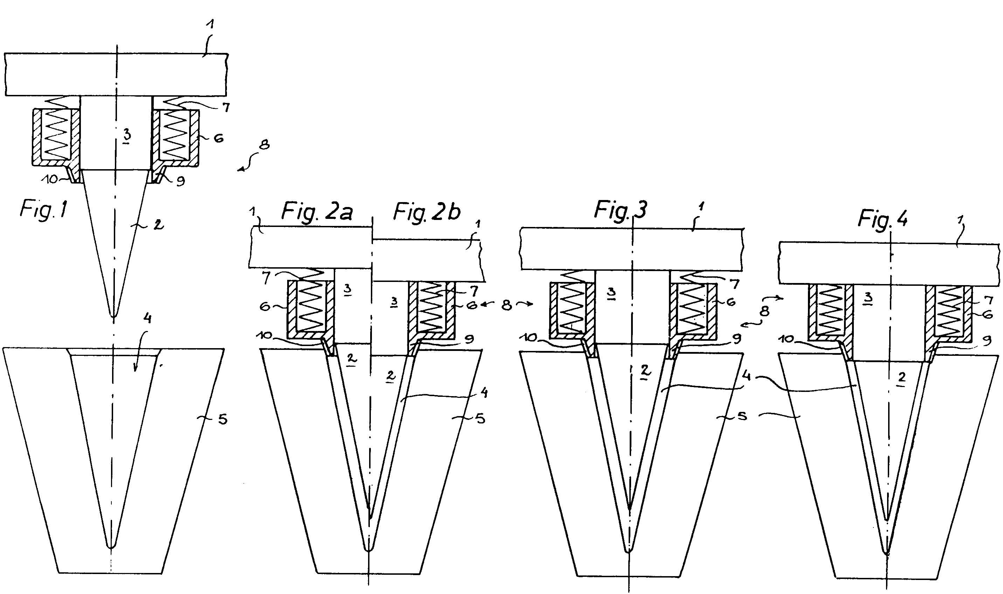

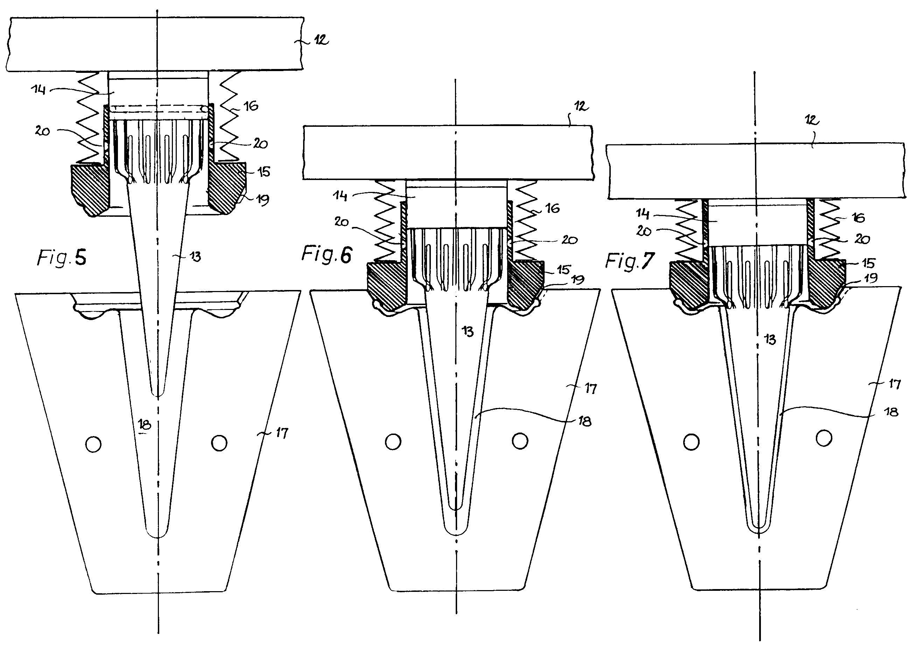

Ausführungsbeispiele von mehrteiligen Backformen mit Hinweisen auf den Verfahrensablauf zur Herstellung eines Backerzeugnisses sind in den Zeichnungen dargestellt. Die Figuren zeigen Backformen zur Herstellung von Eistüten mit einem oberen Formteil, teilweise im Schnitt und einen geöffneten Form-Unterteil. Fig. 1 zeigt die Backform geöffnet, Fig. 2a geschlossen, mit nicht vollständig eingeschobenen Formkern, Fig. 2b dieselbe Form mit zur Gänze eintauchendem Formkern, Fig. 3 die Form mit zurückgezogenem Formkern und Fig. 4 die Form mit gänzlich eingeschobenem Formkern, Fig. 5 eine andere Form in geöffnetem Zustand, Fig. 6, die Form nach Fig. 5 geschlossen, bei noch nicht vollständig eintauchendem Formkern und geöffnetem Dampfauslaß außerhalb der Teilungsebene und Fig.7 die Form nach den Fig.5 und 6 mit vollständig eingeschobenem Formkern.

Eine mehrteilige Backform nach den Fig. 1 bis 4 zur Herstellung einer einfachen Eistüte umfaßt eine Formplatte 1, auf der ein im wesentlichen kegelförmiger Formkern 2, der in einen Führungszylinder 3 übergeht, starr befestigt ist. Der Formkern 2, der die Innenkontur einer Eistüte trägt, taucht in eine kegelfärmige Ausnehmung 4 eines Form-Unterteiles 5, welcher axial in zwei Hälften teilbar ist. Die kegelförmige Ausnehmung 4 formt die Außenfläche bzw. Außenkontur der Eistüte.

Zusätzlich ist noch ein ringförmiger Formteil 6 vorgesehen, der den Führungszylinder 3 des Formkernes 2 umgibt und in axialer Richtung gegen die Kraft von Federn 7 verschiebbar ist. Die Formplatte 1 mit dem Formkern 2, dem Führungszylinder 3 und dem ringförmigen Formteil 6 bilden den oberen Formteil 8.

Beim Schließen der Form, also der Annäherung des oberen Formteiles 8 an den Form-Unterteil 5 bis zur Stellung nach Fig. 4, berührt die kegelige Stirnfläche 9 des ringförmigen Formkörpers 6 vorerst den Rand der Ausnehmung 4 und legt sich dort an. Schlitze 10 in der Stirnfläche 9 sorgen für eine Bei lüftung bzw. wirken als Dampfauslaß der nun verschlossenen Form. Fig. 2a zeigt die Form in dieser Zwischenstellung. Bei weiterem Schließen der Form gemäß Fig. 2b taucht der Formkern tief in die Ausnehmung 4 ein, bis die Formplatte 1 am ringförmigen Formteil 6 ansteht und die Federn 7 zur Gänze zusammengedrückt sind. Der Spalt zwischen dem Formkern 2 und der Wand der Ausnehmung 4 definiert die Wandstärke des Endprodukts.

Die Herstellung einer Eistüte kann nun dadurch erfolgen, daß die Ausnehmung 4 des Form-Unterteiles 5 mit flüssigem Waffelteig in entsprechender Menge in der Position nach Fig. 1 gefüllt wird und daß dann die geheizte Form gemäß Fig. 2a geschlossen, der Formkörper gebacken und die Form währenddessen in die verdichtende Endstellung nach Fig. 2b gebracht wird. Das Endprodukt kann nach Zurückziehen des oberen Formteiles 8 und Öffnen des Form-Unterteiles 5 entnommen werden, wobei dem ringförmigen Formteil 6 die Funktion eines Abstreifers zukommt, sobald der Formkern 2 aus dem Fertigprodukt herausgezogen wird.

Ein besonderes Verfahren zur Herstellung einer eßbaren Eistüte aus Waffelteig ist in den Fig. 1 bis 4 dargestellt. Es wird, so wie oben für das einfache Herstellungsverfahren der Form-Unterteil 5 gemäß Fig. 1 mit der entsprechenden Menge an Waffelteig gefüllt. Dann wird der obere Formteil 8 so weit an den Form-Unterteil 5 angenähert, bis der ringförmige Formteil 6 mit seiner konischen Stirnfläche 9 auf dem Rand der Ausnehmung 4 aufsitzt und somit die Form - bis auf die Schlitze 10 - abschließt. In dieser Position, die in Fig. 2a dargestellt ist, erfolgt ein Backvorgang von beispielsweise 10 Sekunden. Sodann wird der Formkern 2 stoßartig in seine Endstellung gebracht (Fig. 2b) und sofort (nach 1 bis 4 Sekunden) wieder in eine Position nach Fig. 3 zurückgezogen. Kurzzeitig wurde damit das bereits leicht angebackene Produkt in die Endform gebracht, wobei alle Hohlräume der Form zwangsläufig ausgefüllt wurden. Durch das anschließende Zurückziehen des Formkörpers in die Position nach Fig. 2b, in der die Spaltbreite zwischen Form-Unterteil 5 und Formkern 2 etwa der doppelten bis dreifachen Wandstärke des Endproduktes entspricht, kann sich der eigentliche Backvorgang im Ausmaß von beispielsweise 100 Sekunden entfalten, worauf der Formkern 2 schließlich in die Endposition gemäß Fig. 4 vorgeschoben und das Produkt verdichtet wird und das Ausbacken für etwa 60 Sekunden anschließt. Wie den Fig. 2 bis 4 zu entnehmen ist, bleibt die Form während des Vorbackens (Fig. 2a), Blitztauchens des Formkernes 2 (Fig. 2b) und während des eigentlichen Backens (Fig.3) sowie des Ausbackens (Fig. 4) geschlossen, da der ringförmige Formteil 6 die Form abschließt, sodaß allenfalls Dampf durch die Schlitze 10, nicht aber Teig austreten oder etwa beim "Blitztauchen" des Formkernes 2 herausquellen oder spritzen kann.

Wie erwähnt, hält der ringförmige Formteil 6 das fertige Backerzeugnis nach Herausziehen des Formkernes 2 im Form-Unterteil 5 vorerst fest, sodaß das Backerzeugnis nicht am Formkern 2 kleben bleibt. Der Form-Unterteil 5 wird dann axial geteilt und das fertige Backerzeugnis fällt heraus oder kann entnommen werden. Bei dem Herstellungsverfahren kann das erwähnte Vorbacken entfallen und der Waffelteig nach dem Einfüllen in die Ausnehmung 4 des heißen Form-Unterteiles 5 durch stoßartiges Eintauchen ("Blitztauchen") des Formkernes 2 bei geschlossener Form bis in die letzte Ecke der Form verteilt werden.

Nachfolgend wird als komplexe Alternative die Backform für eine Eistüte mit ringförmigen Kragen als Tropfrand unterhalb der Aufnahmeöffnung der Eistüte beschrieben.

Eine Backform gemäß Fig. 5 bis 7 für eine Eistüte, die über einen tassenartig ausladenden Tropfrand etwa im zweiten Drittel der Gesamthöhe der Eistüte verfügt, umfaßt ebenfalls eine Formplatte 12 auf der ein Formkern 13 mit Führungszylinder 14 starr befestigt ist. Auf dem Führungszylinder 14 gleitet ein ringförmiger Formteil 15. Federn 16 drücken den ringförmigen Formteil 15 in eine von der Formplatte 12 distanzierte Lage. Anschläge, die ein Herausfallen des ringförmigen Formteiles 15 verhindern, sind in den Fig. 1 bis 7 zur Vereinfachung der Darstellung nicht gezeichnet. Die Formplatte 12 ist gegen einen axial zweigeteilten Form-Unterteil 17 beweglich, dessen Ausnehmung 18 die Außenkontur der konischen Eistüte und bei erwünschtem Tropfrand dessen Unterseite ausformt. Die Fig. 5 bis 7 zeigen den Form-Unterteil 17 in seiner vertikalen Teilungsebene mit Paßstiften. Der Form-Unterteil 17 trägt oben eine Ausformung für den tellerförmig ausladenden Tropfrand der Eistüte. Auf dem ringförmigen Formteil 15 ist stirnseitig das Negativ der Oberseite des Tropfrandes der Eistüte ausgebildet. Die zylindrische oder leicht konische Innenfläche des ringförmigen Formteiles 15 formt die Außenseite des oberen Teiles der Eistüte nächst der Aufnahmeöffnung. Der Formkern 13 umfaßt die gesamte Innenkontur der Eistüte, die einen kegeligen unteren Teil und einen etwa zylindrischen oberen Teil mit Innenrippen umfaßt.

Stirnseitig am ringförmigen Formteil 15 sind ein oder mehrere Schlitze 19 ausgebildet (z.B. sechs Schlitze, jeweils um 60° zueinander versetzt), die radial verlaufen und einen Kanal bilden ,der die Dichtfläche zwischen dem Form-Unterteil 17 und dem ringförmigen Formteil 15 überbrückt, sodaß bei geschlossener Form (Fig. 6, 7) dort Dampf entweichen kann. Diese Schlitze 19 könnten auch im Form-Unterteil 17 in der Dichtfläche ausgebildet sein. Im ringförmigen Formteil 15 sind ferner ein oder mehrere Dampfauslässe 20 (z.B. zwei Bohrungen, jeweils um 180° zueinander versetzt) vorgesehen. Diesen liegt innen der Führungszylinder 14 gegenüber, der in eine Verschlußposition für die Dampfauslässe 20 verschiebbar ist (Fig. 7).

Es wird der Funktionsablauf nachfolgend anhand der Fig. 5 bis 7 erklärt:

Bei offener Form nach Fig. 5 ist die Formplatte 12 so weit von dem Form-Unterteil 17 entfernt, daß in die kegelförmige Ausnehmung 18 Teig eingebracht werden kann. Es wird darauf die Formplatte 12 soweit gegen den Form-Unterteil 17 abgesenkt, bis der ringförmige Formteil 15 stirnseitig auf der oberen Paßfläche des Form-Unterteiles 17 aufliegt (Fig. 6). Durch die Federung des ringförmigen Formteiles 15 ergibt sich eine selbstnachstellende Abdichtung. Die Form ist damit geschlossen. Der Teig wird durch den eindringenden Formkern 13 und den Dampffluß annähernd in die endgültige Form gebracht, jedoch sind die Wandstärken jeweils noch zu groß. Bei dem Vorbacken in der Position nach Fig. 6 (etwa 20 Sekunden) entweicht der Dampf sowohl durch die Dampfschlitze 19 als auch durch die Dampfauslässe 20. Durch das Vorbacken und den Wasserverlust verfestigt sich der Teig zu einer plastischen Zwischenform.

Es folgt nun ein Komprimieren bzw. Verdichten der Masse dadurch, daß die Formplatte 12 in die Endstellung (Fig. 7) gebracht wird. An der Position des ringförmigen Formteiles 15 gegenüber dem Form-Unterteil 17 ändert sich nichts, jedoch preßt der tiefer eindringende Formkern 13 den vorgebackenen mit Hohlräumen versehenen Teig zusammen, bis die endgültigen Abmessungen erreicht sind. Dabei werden Hohlräume verkleinert und es erfolgt das vollständige Ausbacken des Teiges. Beim vollständigen Absenken der Formplatte 12 schiebt sich die Außenfläche des Führungszylinders 14 des Formkernes 13 vor die inneren scharfkantigen Einmündungen der Dampfauslässe 20 und schließt diese ab. Im oberen Teil des Backgutes erfolgt eine Umkehr der Dampfströmungsrichtung für den eventuell noch vorhandenen Restdampf in Richtung auf die Dampfschlitze 19, die hier im Ausführungsbeispiel in der horizontalen Teilungsfläche der Form im ringförmigen Formteil 15 zwischen diesen und dem Form-Unterteil 17 liegen.

In der Mantelfläche des Führungszylinders 14 kann ein Dichtring eingelegt sein.

Das Entformen erfolgt in sehr vorteilhafter Weise in Etappen, sodaß die Eistüte auch bei Verarbeitung von klebrigen zuckerhaltigen Teigen nicht zerstört oder verformt wird. Durch Anheben der Formplatte 12 aus der Position nach Fig. 7 in die Position nach Fig. 6 löst sich der Formkern 13 in Inneren der verfestigten und ausgebackenen Eistüte. Die Eistüte selbst wird durch den ringförmigen Formteil 15 vorerst noch in der Form zurückgehalten. In weiterer Folge hebt die Formplatte 12 auch den ringförmigen Formteil 15 von der Eistüte ab (Fig. 5) und schließlich werden die Hälften des Form-Unterteiles 17 getrennt, sodaß die Eistüte herausfällt. Die Form selbst bleibt insbesondere was den Bereich der Dampfschlitze 19 und der Dampfauslässe 20 betrifft, völlig sauber und neigt nicht zur Verstopfung, weil bezüglich der Dampfschlitze 19 in der Teilungsfläche ein Selbstreinigungseffekt eintritt und die Dampfauslässe 20 nach dem Dampfaustritt beim Komprimieren der Form verschlossen werden, wobei der Abschereffekt durch die scharfen Innenkanten der hier als Kegelbohrungen ausgebildeten Dampfauslässe der Selbstreinigung förderlich sind. Auch bei dieser Ausführung kann das Verfahren, wie es zu Fig. 1 bis 4 erklärt wurde, verwendet werden.

Der im Zusammenhang mit den Fig. 1 bis 7 genannte Führungszylinder 3 bzw. 14 kann als Kreiszylinder aber auch als ein Körper mit einer Mantelfläche aus zueinander parallelen Erzeugenden ausgebildet sein, die - abgesehen von einem Kreiseinem Oval oder einem Rechteck od.dgl. als Basiskurve folgen.

## Patentansprüche

1. Mehrteilige Backform zur Herstellung eines Backerzeugnisses aus Waffelteig od.dgl., wie einer eßbaren Eistüte oder eines Eisbechers, mit mindestens einem den Waffelteig aufnehmenden Form-Unterteil (5, 17) mit der Außenkontur des Backerzeugnisses, in den ein im wesentlichen kegelförmiger Formkern (2, 13) eines oberen Formteiles (8) mit der Innenkontur des Backerzeugnisses einschiebbar ist, und mit Dampfauslässen (10, 19, 20) zum Abführen des beim Backvorgang entstehenden Dampfes, wobei der im wesentlichen kegelförmige Formkern (2, 13) mit einem zylindrischen Teil (3, 14) an einer Formplatte (1, 12) gehalten ist, ein ringförmiger Formteil (6, 15) den zylindrischen Teil (3, 14) umgibt und eine an der Formplatte (1, 12) fußende Druckkraft axial der Schließbewegung der Backform entgegengerichtet ist, **dadurch gekennzeichnet**, daß der ringförmige Formteil (6, 15) auf dem als Führungszylinder (3, 14) für diesen ausgebildeten zylindrischen Teil relativ zum Formkern (2, 13) verschiebbar gelagert und gegen den Form-Unterteil (5, 17) durch eine Druckkraft, insbesondere durch Druckfedern (7, 16), die sich einerseits an der Formplatte (1, 12) des oberen Formteiles (8), welche den Formkern (2, 13) trägt und anderseits an Schultern des verschiebbaren ringförmigen Formteiles (6, 15) abstützen, vorspannbar ist, sodaß der ringförmige Formteil (6, 15) beim Schließen der Form der Endlage des Formkernes (2, 13) im Form-Unterteil (5, 17) vorauseilt.

2. Mehrteilige Backform nach Anspruch 1, **dadurch gekennzeichnet**, daß der relativ zum Formkern (2, 13) verschiebbare ringförmige Formteil (6, 15) stirnseitig, dem Form-Unterteil (5, 17) zugewandt, an seinem Umfang die Außenkontur des Randes des Backerzeugnisses, beispielsweise des Öffnungsrandes einer Eistüte trägt und den Form-Unterteil (5, 17) schon bei aneinander angenäherten oberem Formteil (8) und Form-Unterteil (5, 17) sowie auch bei geschlossener Backform, insbesondere unter Beibehaltung mindestens eines Dampfauslasses (10, 19), abschließt.

3. Mehrteilige Backform nach den Ansprüchen 1 oder 2, **dadurch** **gekennzeichnet**, daß in mindestens einem Formteil (5, 6, 8, 15, 17) außerhalb einer Teilungsfläche mindestens ein Dampfauslaß (20) vorgesehen ist, der - insbesondere zeitverschoben gegenüber dem Schließen der Form - verschließbar ausgebildet ist.

4. Mehrteilige Backform nach einem der Ansprüche 1 bis 3, **dadurch gekennzeichnet**, daß der Form-Unterteil (17) axial geteilt und mit einer Ausnehmung (4, 18) gemäß der Außenkontur eines unteren Eistütenbereichs einschließlich der Unterkontur eines tellerförmig zwischen dem Form-Unterteil (17) und dem oberen Formteil ausladenden Tropfenfängers der Eistüte im Bereich der Teilungsfläche ausgebildet ist, und daß der ringförmige Formteil (15) eine stirnseitige Außenkontur entsprechend der Oberseite des tellerförmigen Tropfenfängers der Eistüte und eine Innenkontur der Ringfläche entsprechend der Außenkontur des oberen Tütenteiles aufweist. (Fig. 5)

5. Mehrteilige Backform nach Anspruch 4, **dadurch gekennzeichnet**, daß im ringförmigen Formteil (15) mindestens ein verschließbarer Dampfauslaß (20), insbesondere eine scharfkantig ausmündende kegelige Bohrung im Bereich der Aufnahmeöffnung der Eistüte vorgesehen ist und daß im starr an der Formplatte (12) angeordneten Formkern (13), in dem die Aufnahmeöffnung der Tüte ausformenden oder an diesen anschließenden Führungszylinder (14), eine Fläche ausgebildet ist, die an der Innenfläche des ringförmigen Formteiles (15) anliegt und beim Verdichten der geschlossenen Form und vollständigem Einschieben des Formkernes (13) gegen die Kraft der den ringförmigen Formteil (15) abstützenden Federn (16) über die innere Öffnung des Dampfauslasses (20) schiebbar ist. (Fig. 7)

6. Mehrteilige Backform nach einem der Ansprüche 4 oder 5, **dadurch gekennzeichnet**, daß der zwischen der Formplatte (1, 12) und dem kegeligen Formkern (2, 13) vorgesehene Führungszylinder (3, 14) mit seiner Mantelfläche über die inneren Ausmündungen der Dampfauslässe (20), diese verschließend, schiebbar ist.

7. Mehrteilige Backform nach den Ansprüchen 1 bis 6, **dadurch gekennzeichnet**, daß der ringförmige Formteil (6, 15) und der Formkern (2, 13) mit dem Führungszylinder (3, 14) aus unterschiedlichen Materialien, beispielsweise Messing und Stahl, bestehen.

8. Mehrteilige Backform nach einem der Ansprüche 4 bis 7, **dadurch gekennzeichnet**, daß der ringförmige Formteil (6, 15) als Niederhalter zum zeitweiligen Festhalten der fertigen Eistüte im Form-Unterteil (5, 17) beim stufenweisen Entformen während des Herausziehens des Formkernes (2, 13) vorgesehen ist.

9. Verfahren zur Herstellung eines Backerzeubnisses aus Waffelteig wie beispielsweise einer eßbaren Eistüte, eines Eisbechers od.dgl. mit einer mehrteiligen Backform nach einem der Ansprüche 1 bis 8, **dadurch gekennzeichnet**, daß nach Befüllen des Form-Unterteiles mit Waffelteig der obere Formteil und der Form-Unterteil einander so weit angenähert werden, bis der ringförmige Formteil auf der Öffnung des Form-Unterteiles unter Vorspannung aufliegt und die Öffnung abschließt, daß dann gegebenenfalls nach einem Vorbacken von beispielsweise 10 Sekunden der Formkern durch den ringförmigen Formteil hindurch in den Form-Unterteil bis etwa in eine Position im Spaltabstand entsprechend der endgültigen Wandstärke des fertigen Backerzeugnisses vorzugsweise auf die Dauer von 1 bis 4 Sekunden stoßartig vorgeschoben wird, daß der Formkern dann in eine Position entsprechend etwa der doppelten bis dreifachen Wandstärke des fertigen Backerzeugnisses zurückgezogen und in dieser Position der Backvorgang bei einer Eistüte etwa 100 Sekunden durchgeführt wird, daß dann der Formkern in die Position der endgültigen Wandstärke vorgeschoben, das Backerzeugnis verdichtet und das Ausbacken beispielsweise für 60 Sekunden durchgeführt wird und schließlich der obere Formteil vom Form-Unterteil getrennt wird, wobei der ringförmige Formteil das Backerzeugnis während des Öffnens der Form im Form-Unterteil festhält, bis der Abstand des oberen Formteils vom Form-Unterteil größer ist als der Verschiebungsweg des ringförmigen Formteils längs des Formkernes und sodann der Form-Unterteil längs einer Symmetrieebene geteilt und das Backerzeugnis entnommen bzw. ausgestoßen wird.

## Claims

1. Composite baking mould for the production of a baked product from wafer dough or the like, such as an edible icecream cone or an icecream cup, with at least one lower mould part (5, 17), receiving the wafer dough, having the outer contour of the baked product, into which a substantially conical mould core (2, 13) of an upper mould part (8) with the inner contour of the baked product is able to be pushed, and with steam outlets (10, 19, 20) for the removal of the steam arising during the baking process, in which the substantially conical mould core (2, 13) is held with a cylindrical part (3, 14) against a mould plate (1, 12), an annular mould part (6, 15) surrounds the cylindrical part (3, 14) and a pressure force based on the mould plate (1, 12) is directed axially opposed to the closing movement of the baking mould, characterised in that the annular shaped part (6, 15) is mounted on the cylindrical part, constructed as guide cylinder (3, 14) for this, so as to be slidable relative to the mould core (2, 13) and is able to be prestressed against the lower part (5, 17) of the mould by a pressure force, in particular by pressure springs (7, 16) which rest on the one hand against the mould plate (1, 12) of the upper mould part (8) carrying the mould core (2, 13) and on the other hand rest against shoulders of the displaceable annular mould part (6, 15), so that the annular mould part (6, 15) on closing of the mould precedes the and position of the mould core (2, 13) in the lower part (5, 17) of the mould.

2. Composite baking mould according to Claim 1, characterized in that the annular mould part (6, 15) which is displaceable relative to the mould core (2, 13) carries on the end face, facing the lower part (5, 17) of the mould, on its periphery the outer contour of the rim of the baked product, for example of the opening rim of an icecream cone and closes off the lower part (5, 17) of the mould already when the upper mould part (8) and lower mould part (5, 17) are moved close to each other and also when the baking mould is closed, in particular with at least one steam outlet (10, 19) being retained.

3. Composite baking mould according to Claims 1 or 2, characterised in that in at least one mould part (5, 6, 8, 15, 17) outside a plane of division at least one steam outlet (20) is provided which - in particular staggered in time with respect to the closing of the mould - is constructed so as to be closeable.

4. Composite baking mould according to one of Claims 1 to 3, characterized in that the lower part (17) of the mould is divided axially and is constructed with a cavity (4, 18) according to the outer contour of a lower icecream cone region including the lower contour of a drip collector of the icecream cone, projecting in a plate shape between the lower part (17) of the mould and the upper part of the mould, in the region of the plane of division, and that the annular mould part (15) has an outer contour on the end face corresponding to the upper side of the plate-shaped drip collector of the icecream cone and has an inner contour of the annular surface corresponding to the outer contour of the upper cone part (Fig. 5).

5. Composite baking mould according to Claim 4, characterised in that in the annular mould part (15) at least one closeable steam outlet (20) is provided, in particular a conical bore, opening out with sharp edges, in the region of the receiving opening, of the icecream cone, and that in the mould core (13), arranged rigidly against the mould plate (12), in the guide cylinder (14) forming the receiving opening of the cone or adjoining thereto, a surface is constructed which lies against the inner surface of the annular mould part (15) and on compacting the closed mould and on complete pushing in of the mould core (13) is displaceable against the force of the springs (16) supporting the annular mould part (15) over the inner opening of the steam outlet (20) (Fig. 7).

6. Composite baking mould according to one of Claims 4 or 5, characterised in that the guide cylinder (3, 14) provided between the mould plate (1, 12) and the conical mould core (2, 13) is able to be pushed with its covering surface over the inner orifices of the steam outlets (20), closing the latter.

7. Composite baking mould according to Claims 1 to 6, characterized in that the annular mould part (6, 15) and the mould core (2, 13) with the guide cylinder (3, 14) consist of different materials, for example brass and steel.

8. Composite baking mould according to one of Claims 4 to 7, characterised in that the annular mould part (6, 15) is provided as holding-down device for the temporary securing of the finished icecream cone in the lower part (5, 17) of the mould on gradual removal from the mould whilst the mould core (2, 13) is pulled out.

9. A method for the production of a baked product from wafer dough such as, for example, an edible icecream cone, an icecream cup or the like with a composite baking mould according to one of Claims 1 to 8, characterised in that after filling the lower part of the mould with wafer dough, the upper mould part and the lower part of the mould are moved close to each other until the annular mould part lies on the opening of the lower part of the mould under prestressing and closes the opening, that then if necessary after a pre-baking of for example 10 seconds, the mould core is advanced jerkily preferably for a duration of 1 to 4 seconds through the annular mould part into the lower part of the mould approximately into a position in the gap space corresponding to the final wall thickness of the finished baked product, that the mould core is then withdrawn into a position corresponding approximately to twice to three times the wall thickness of the finished baked product and in this position the baking process is carried out for approximately 100 seconds in the case of an icecream cone, that then the mould core is advanced into the position of the final wall thickness, the baked product is compacted and the baking is carried out for example for 60 seconds and finally the upper mould part is separated from the lower part of the mould, in which the annular mould part secures the baked product in the lower part of the mould whilst the mould is opened, until the distance of the upper mould part from the lower part of the mould is greater than the path of displacement of the annular mould part along the mould core and then the lower part of the mould is divided along a plane of symmetry and the baked product is removed or ejected.

## Revendications

1. Moule à pâtisserie en plusieurs parties destine' à la réalisation de produits de pâtisserie en pâte à gaufre ou analogue, comme un cornet comestible pour glace ou un gobelet pour crème glacée, comprenant au moins une base de moule (5, 17) recevant la pâte à gaufre et ayant le contour extérieur du produit de pâtisserie, base dans laquelle est susceptible d'être introduit un noyau de moule (2, 13) d'une partie de moule supérieure (8), noyau de forme sensiblement conique et ayant le contour intérieur du produit de pâtisserie, et comprenant des conduits d'évacuation de vapeur (10, 19, 20) pour l'évacuation de la vapeur présente dans le processus de cuisson, tandis que le noyau de moule (2, 13) de forme sensiblement conique est maintenu par une partie cylindrique (3, 14) sur une plaque de moule (1, 12), tandis qu'un élément de moule de forme annulaire (6, 15) entoure la partie cylindrique (3, 14) et qu'une force de compression s'appuyant sur la base de moule (1, 12) est dirigée axialement à l'opposé du déplacement de fermeture du moule, caractérisé en ce que l'élément de moule de forme annulaire (6, 15) est monté à coulissement par rapport au noyau de moule ((2, 13) sur la partie cylindrique conformée comme un cylindre de guide (3, 14) pour cet élément et est susceptible d'être pressé contre la base de moule (5, 17) par une force de compression, en particulier par des ressorts de compression (7, 16) qui s'appuient, d'une part sur la plaque de moule de la partie supérieure de moule (8), qui porte le noyau de moule (2, 13), et d'autre part sur des épaulements de l'élément de moule de forme annulaire (6, 15) et susceptible de coulissement, de telle manière que cet élément de moule de forme annulaire (6, 15), lors de la fermeture du moule, soit en avant de la position finale du noyau de moule (2, 13) dans la base de moule (5, 17).

2. Moule à pâtisserie en plusieurs parties selon la revendication 1, caractérisé en ce que l'élément de moule (6, 15) de forme annulaire susceptible de coulissement par rapport au noyau de moule (2, 13), porte sur son côte frontal, tourné vers la base de moule (5, 17), à sa périphérie le contour extérieur du bord du produit de pâtisserie, par exemple le bord de l'ouverture d'un cornet pour glace et en ce que la base de moule (5, 17), se ferme dès que la partie supérieure de moule (8) et la base de moule (5, 17) sont rapprochées l'une de l'autre, ainsi que lorsque le moule de pâtisserie est fermé, notamment en conservant au moins un conduit d'évacuation de vapeur (10, 19).

3. Moule à pâtisserie en plusieurs parties selon les revendications 1 ou 2, caractérisé en ce que, dans au moins un élément de moule (5, 6, 8, 15, 17) à l'extérieur d'une surface de séparation, est prévue au moins un conduit d'évacuation de vapeur (20), qui est conformé pour être obturable- en particulier avec un décalage dans le temps par rapport à la fermeture du moule.

4. Moule à pâtisserie en plusieurs parties selon l'une des revendications 1 à 3, caractérisé en ce que la base de moule (17) est partagée axialement et est réalisée avec un logement (4, 18) dans la région de la surface de partage selon le contour extérieur d'une région inférieure de cornet pour glace incluant le contour inférieur d'un capteur de gouttes du cornet pour glace, en forme d'assiette et se déchargeant entre la base de moule (17) et l'élément supérieur' de moule, et en ce que l'élément de moule de forme annulaire (15) présente un contour extérieur du côte frontal correspondant à la face supérieure du capteur de gouttes en forme d'assiette du cornet pour glace et un contour intérieur de la surface annulaire correspondant au contour extérieur de la région supérieure du cornet.(fig.5)

5. Moule à pâtisserie en plusieurs parties selon la revendication 4, caractérisé en ce que, dans l'élément de moule de forme annulaire (15) est prévu au moins un conduit d'évacuation de vapeur (20) obturable, en particulier un alésage conique débouchant par un bord aigu dans la région de l'ouverture de remplissage du cornet pour glace, et en ce que dans le noyau de moule (13) fixé rigidement à la plaque de moule (12), dans le cylindre de guidage (14) formant au démoulage l'ouverture de remplissage du cornet ou adjacent à celle-ci, est ménagée une surface qui est disposée contre la paroi intérieure de l'élément de moule (15) de forme annulaire et pour l'étanchéité du moule fermé et la pénétration complète du noyau de moule (13), à l'encontre de la force des ressorts (16) en appui sur l'élément de moule (15) de forme annulaire, est susceptible de coulisser au dessus de l'ouverture intérieure du conduit d'évacuation de vapeur (20).(fig. 7)

6. Moule à pâtisserie en plusieurs parties selon l'une des revendications 4 ou 5, caractérisé en ce que le cylindre de guidage (3, 14) prévu entre la plaque de moule (1, 12) et le noyau de moule conique (2, 13) est susceptible de coulisser par sa paroi d'enveloppe au-dessus des débouchés intérieurs des conduits d'évacuation de vaceur (20), obturant ces conduits.

7. Moule à pâtisserie en plusieurs parties selon l'une des revendications 1 à 6, caractérisé en ce que l'élément de moule de forme annulaire (6, 15) et le noyau de moule (2, 13) avec le cylindre de guidage (3, 14) sont réalisés en des matériaux différents, par exemple en laiton et en acier.

8. Moule à pâtisserie en plusieurs parties selon l'une des revendications 4 à 7, caractérise en ce que l'élément de moule de forme annulaire (6, 15) et prévu comme serre-flan pour le maintien temporaire du cornet pour glace achevé dans la base de moule (5, 17), dans le cas d'un démoulage par étapes pendant le retrait du noyau de moule (2, 13).

9. Procédé pour la fabrication d'un produit de pâtisserie en pâte à gaufre, comme par exemple un cornet comestible pour glace, un gobelet pour crème glacée ou analogue, au moyen d'un moule à pâtisserie en plusieurs parties selon l'une des revendications 1 à 8, caractérisé en ce que, après remplissage de la base de moule avec la pâte à gaufre, l'élément supérieur de moule et la base de moule sont rapprochés l'un de l'autre jusqu'à ce que l'élément de moule de forme annulaire repose sous précontrainte sur l'ouverture de la base de moule et obture cette ouverture, en ce que, éventuellement après une précuisson de 10 secondes par exemple, le noyau de moule est poussé de manière saccadée par l'élément de moule, de forme annulaire dans la base de moule, sensiblement jusqu'à une position d'espacement correspondant à l'épaisseur de paroi finale du produit de pâtisserie achevé, en une durée de 1 à 4 secondes, en ce que le noyau de moule est ensuite rétracte jusqu'à une position correspondant sensiblement à deux à trois fois l'épaisseur de paroi du produit de pâtisserie achevé et en ce que, dans cette position, on effectue le processus de cuisson pendant environ 100 secondes dans le cas d'un cornet pour glace, en ce qu'on pousse ensuite le noyau de moule dans la position de l'épaisseur' de paroi finale, on comprime le produit de pâtisserie et on achève la cuisson pendant 60 secondes par exemple et enfin on sépare l'élément supérieur de moule de la base de moule, l'élément de moule de forme annulaire maintenant le produit de pâtisserie dans la base de moule pendant l'ouverture de ce moule, jusqu'à ce que la distance entre l'élément supérieur de moule et la base de moule soit supérieure à la course de déplacement de l'élément de moule de forme annulaire le long du noyau de moule, la base de moule étant alors partagée selon un plan de symétrie et le produit de pâtisserie étant enlevé ou éjecté.
